# FASCICULE DE BREVET EUROPEEN

(11) **EP 2 366 233 B1**
(45) Date de publication et mention de la délivrance du brevet: **23.01.2013**
(21) Numéro de dépôt: 09799079.0
(22) Date de dépôt: 10.12.2009
(51) Int. Cl.: H04L 9/32, G01S 13/78

(54) **PROCEDE SECURISE DE TRANSMISSION DE DONNEES POUR SYSTEMS IFF**
SICHERES VERFAHREN ZUM ÜBERTRAGEN VON DATEN FÜR IFF SYSTEMS
SECURE METHOD FOR TRANSMITTING DATA FOR IFF SYSTEMS

(30) Priorité: 16.12.2008 FR 0807071
(43) Date de publication de la demande: 21.09.2011
(73) Titulaire: THALES, 92200 Neuilly-sur-Seine (FR)
(72) Inventeur: DE LARMINAT, Eric, F-53810 Change (FR); LETELLIER, Frankie, F-53000 Laval (FR)
(74) Mandataire: Lucas, Laurent Jacques
(86) Numéro de dépôt international: PCT/EP2009/066879
(87) Numéro de publication internationale: WO 2010/069860

(56) Documents cités:
- US-A- 5 822 430
- US-A1- 2006 008 087
- MANUEL L GARCIA ET AL: "Test for Success: Next Generation Aircraft Identification System RF Simulation" INTEGRATED COMMUNICATIONS, NAVIGATION AND SURVEILLANCE CONFERENCE, 200 7. ICNS '07, IEEE, PI, 1 avril 2007 (2007-04-01), pages 1-10, XP031115821 ISBN: 978-1-4244-1215-0
- MAREK BOREJKO: "Monopulse IFF interrogator antenna with optimised parameters, minimising the possibility of generating false replies by transponder" SCIENTIFIC INDUSTRIAL CENTRE OF PROFESSIONAL ELECTRONICS RADWAR SA, [Online] 2006, pages 1-4, XP002540310 Extrait de l'Internet: URL:http://ieeexplore.ieee.org/stamp/stamp .jsp?arnumber=04345287> [extrait le 2009-08-05]

## Description

La présente invention concerne un procédé sécurisé de transmission de données. Elle s'applique notamment à la transmission de données entre un interrogateur et un répondeur.

Le besoin de transmettre des données entre deux systèmes distants impose généralement l'ajout d'équipements spécifiques. Des techniques connues permettent de s'affranchir de ces équipements supplémentaires en transmettant des données via des dispositifs d'identification déjà présents sur les systèmes distants, ces dispositifs étant par exemple des interrogateurs et/ou répondeurs.

Pour rappel, un grand nombre d'équipements, par exemple les aéronefs, sont équipés de répondeurs permettant d'émettre un code d'identification qui leur est propre. A titre d'illustration, un transpondeur placé sur un navire émet un message d'interrogation ; ce message est reçu par le répondeur d'un avion, lequel répondeur émet en retour un code d'identification de l'avion. En outre, lorsque le mode de transmission est sécurisé, ce code d'identification est retourné sous une forme non décodable pour un transpondeur non pourvu d'une fonction secrète adéquate. Parmi les modes sécurisés, le mode 4 et son dérivé le NSM, acronyme anglo-saxon pour « National Secure Mode » signifiant « mode de sécurité national » sont particulièrement répandus dans les équipements actuellement en fonction.

Le brevet déposé pour l'US Navy et publié sous la référence US6476757 propose un procédé de transmission de données fonctionnant sur un répondeur IFF dans lequel une réponse en mode 2 est émise par le répondeur après que la réponse en mode 4 a été envoyée. Cependant, ce mode de fonctionnement ne respecte pas les protocoles d'échanges standards. Ce procédé ne peut donc pas être mis en oeuvre dans les équipements actuels sans les modifier de manière importante.

La publication « Test for success: Next Generation aircraft identification system RF simulation » par Manuel L. Garcia et al, conférence ICNS, 1-3 mai 2007, passe en revue plusieurs techniques connues d'IFF.

Le brevet publié sous la référence US5822430 propose une méthode pour émettre des données codées via des répondeurs IFF utilisant des challenges cryptés de 32 bits. La méthode consiste en la combinaison d'impulsions anti-interférence avec des bits d'informations.

Aucune des méthodes précitées ne permet de transmettre des données de manière sécurisée, sans modification substantielle des équipements IFF.

Un but de l'invention est de transmettre des données entre un répondeur et un interrogateur, par exemple un répondeur et un interrogateur IFF, avec un niveau de sécurité élevé et sans nécessiter de modification importante au niveau du répondeur et de l'interrogateur. A cet effet, l'invention a pour objet un procédé de transmission de données entre un répondeur et un interrogateur communiquant dans un mode sécurisé dans lequel l'interrogateur émet un signal d'interrogation comprenant une séquence d'authentification vers le répondeur qui répond à l'interrogateur par un signal soumis à un retard temporel dépendant de ladite séquence d'authentification, un message de sélection du type de données à transmettre étant inséré dans ledit signal d'interrogation, le répondeur décodant ledit message de sélection pour émettre vers l'interrogateur les données sélectionnées, le procédé étant caractérisé en ce que lesdites données sont formatées sous la forme de codes d'identification standards pour être masquées.

Un avantage du procédé selon l'invention est qu'il peut être conforme au protocole NSM, déjà en fonctionnement dans un grand nombre d'équipements existants.

Les données transmises sont ainsi masquées vis à vis des équipements ne mettant pas en oeuvre le procédé selon l'invention. En effet, vues de l'extérieur, ces données apparaissent comme de banals codes d'identification, couramment utilisés.

Le procédé de transmission de données selon l'invention, peut être avantageusement utilisé par des interrogateurs, répondeurs et/ou transpondeurs IFF pour échanger des données entre plusieurs plates-formes embarquées.

Selon un mode de mise en oeuvre du procédé de transmission de données selon l'invention, les données transmises sont formatées au format Mark XA.

Selon un mode de mise en oeuvre du procédé de transmission de données selon l'invention, la première séquence de codage est générée par un premier module cryptographique qui la transmet à l'interrogateur, la seconde séquence de codage étant générée par un second module cryptographique qui la transmet vers le répondeur.

Les transmissions entre l'interrogateur et le répondeur peuvent respecter le protocole d'échange « National Secure Mode » ou NSM, les messages échangés étant transmis sous forme de trains d'impulsions, le procédé étant caractérisé en ce qu'il comprend au moins les étapes suivantes :
- le premier module cryptographique (103) génère et transmet à l'interrogateur (101) la seconde séquence de codage ;
- l'interrogateur (101) transmet au répondeur (102) un signal d'interrogation (254) comprenant la séquence d'authentification (253b) et un message de sélection du type de données à transmettre ;
- le second module cryptographique (104) fournit au répondeur (102) la première séquence de codage (253c) ;
- le répondeur transmet, en réponse à l'interrogateur, les données sélectionnées, codées par la première séquence de codage, et formatées sous la forme d'un code d'identification standard ;
- l'interrogateur décode les données transmises en utilisant la seconde séquence de codage.
Le protocole NSM étant un protocole couramment employé sur des équipements déjà existants, un avantage du procédé selon l'invention est qu'il ne requiert pas d'équipements supplémentaires pour pouvoir être mis en oeuvre.

Selon un autre mode de mise en oeuvre du procédé de transmission de données selon l'invention, le répondeur et l'interrogateur accèdent chacun à une table de correspondance associant des séquences d'authentification à un ou plusieurs paramètres de transmission, un paramètre de transmission étant une séquence de codage ou un retard temporel ou un type de données à transmettre. Selon ce mode de mise en oeuvre, les modules cryptographiques ne sont pas nécessaires. En effet, c'est la séquence d'authentification qui détermine quel retard temporel on doit appliquer au signal de réponse ou quelle séquence de codage on doit utiliser.

L'invention a également pour objet un système de transmission de données entre un interrogateur et un répondeur, le système mettant en oeuvre le procédé de transmission de données tel que décrit plus haut.

D'autres caractéristiques apparaîtront à la lecture de la description détaillée donnée à titre d'exemple et non limitative qui suit faite en regard de dessins annexés qui représentent :
- la figure 1, un système mettant en oeuvre un procédé de transmission de données selon l'invention,
- la figure 2, des chronogrammes illustrant les échanges de messages effectués entre les éléments du système de la figure 1.

Par souci de clarté, les mêmes références dans des figures différentes désignent les mêmes objets.

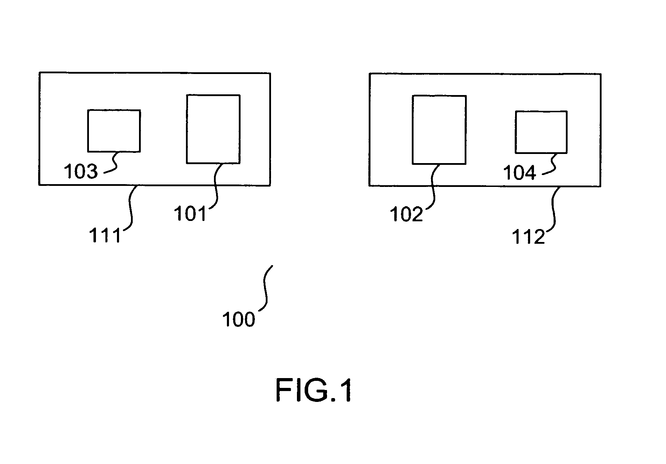

La figure 1 présente un système mettant en oeuvre un procédé de transmission de données selon l'invention. Le système 100 comprend un interrogateur IFF 101, un répondeur IFF 102, un premier module cryptographique 103 relié à l'interrogateur 101, et un second module cryptographique 104 relié au répondeur 102. L'interrogateur 101 et le premier module cryptographique 103 peuvent être intégrés dans un premier appareil 111 et le répondeur 102 et le second module cryptographique 104 peuvent être intégrés dans un second appareil 112 distant du premier. Par exemple, le premier appareil 111 et le second appareil sont des aéronefs, le premier aéronef 111 souhaitant récupérer des informations présentes sur le second aéronef 112, par exemple des données avioniques.

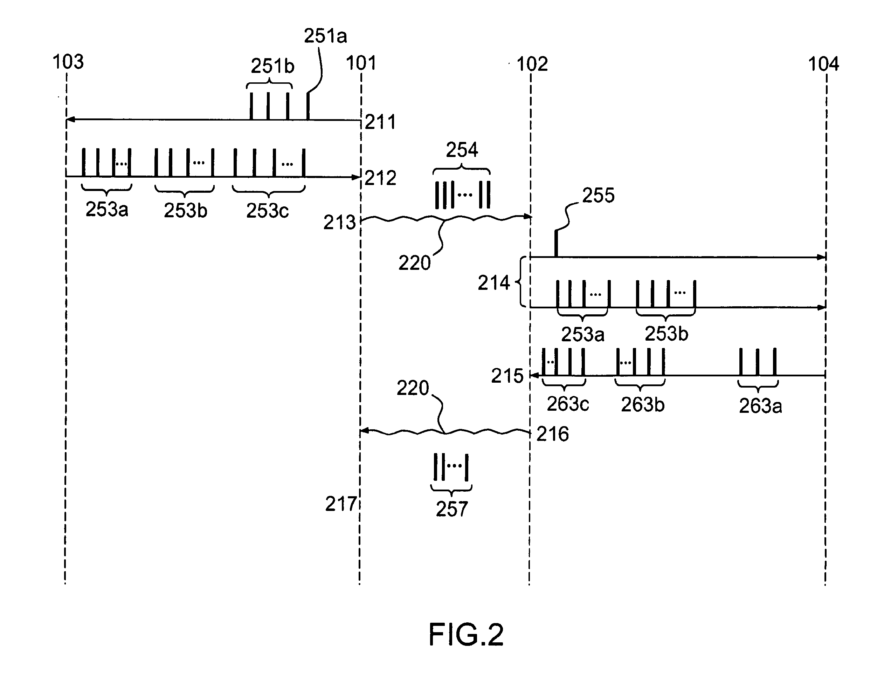

La figure 2 présente des chronogrammes illustrant les échanges de messages effectués lors de l'exécution du procédé selon l'invention. Dans l'exemple, le procédé est mis en oeuvre par le système de la figure 1.

Lors d'une première étape 211, l'interrogateur 101 émet un signal de commande 251 vers le premier module cryptographique 103 afin de requérir une séquence d'authentification au premier module cryptographique 103. Le signal de commande 251 comprend par exemple une première impulsion 251 a déclenchant la réponse du premier module cryptographique 103. Outre cette première impulsion 251a, émise classiquement par les interrogateurs, le signal de commande 251 émise par le procédé selon l'invention peut comprendre également un code 251 b de sélection d'un type de données, ce code 251 b pouvant, par exemple, être une série d'impulsions permettant de choisir le type de données que l'on souhaite récupérer auprès du répondeur 102. Les types de données disponibles sont, par exemple, dans le cas d'un aéronef, des données avioniques telles que le cap, l'altitude ou la vitesse de l'aéronef. Dans l'exemple, le signal de commande 251 est conforme au standard NSM. En effet, un signal de commande 251 NSM classique, constitué d'une impulsion unique 251 a, est un cas particulier de train d'impulsions codant un type d'interrogation NSM) — une impulsion unique correspond classiquement à une interrogation NSM de type « identification » —. Le procédé selon l'invention détourne ainsi l'utilisation classique du format NSM pour y inclure un code 251 b de sélection d'un type de données. Enfin, si aucun code 251 b de sélection de données n'est émis par l'interrogateur 101, alors le mode d'interrogation classique NSM est déclenché.

Dans un deuxième temps 212, le premier module cryptographique 103 répond au signal de commande 251 émis par l'interrogateur 101 en émettant un signal de déclenchement 253 comprenant un préambule d'interrogation 253a et une séquence d'authentification 253b. Outre ce préambule d'interrogation 253a et cette séquence d'authentification 253b, utilisés par les systèmes NSM classiques, le signal de déclenchement 253 émis par l'interrogateur 101 comprend également une séquence de codage 253c qui sera utilisée ultérieurement pour décoder les données transmises par le répondeur 102. Par ailleurs, la séquence d'authentification 253b, générée par le premier module cryptographique 103, dépend du signal de commande 215 préalablement reçu par ledit module cryptographique 103, notamment, de la présence ou de l'absence du code 251 b de sélection d'un type de données. En outre, si un code 251 b de sélection d'un type de données est présent, la valeur de la séquence d'authentification 253b dépend de la valeur dudit code 251 b. Dans l'exemple, le préambule d'interrogation 253a, la séquence d'authentification 253b et la séquence de codage 253c sont des trains d'impulsions consécutifs.

Dans un troisième temps 213, l'interrogateur 101 émet vers le répondeur 102 un signal d'interrogation 254 comprenant le préambule d'interrogation 253a et la séquence d'authentification 253b, la communication étant effectuée dans l'exemple, via une liaison radioélectrique 220. Le signal d'interrogation 254 est conforme au format d'une interrogation NSM classique.

Dans un quatrième temps 214, le répondeur 102, ayant reçu le signal d'interrogation 254 transmis par l'interrogateur 101, propage l'information portée par ledit signal 254 vers le second module cryptographique 104. Dans l'exemple, cette information est codée par un train d'impulsions. Dans l'exemple, le répondeur 102 génère également un signal de déclenchement 255 d'une transaction avec le second module cryptographique 104. Dans l'exemple, le signal de déclenchement 255 est une simple impulsion.

Dans un cinquième temps 215, le second module cryptographique 104 interprète la séquence d'authentification 253b contenue dans le signal d'interrogation 254 qu'il reçoit.

Si la valeur de la séquence d'authentification 253b indique qu'aucun code 251 b de sélection d'un type de données n'avait été émis par l'interrogateur 101, alors le second module cryptographique 104 passe en mode d'interrogation classique, non représenté sur la figure 2.

A contrario, si la valeur de la séquence d'authentification 253b indique qu'un code 251 b de sélection d'un type de données avait été émis par l'interrogateur 101, alors le second module cryptographique 104 passe en mode de transmission de données, ce mode étant propre à l'invention. Plusieurs cas peuvent alors se présenter :
o le signal d'interrogation 254 n'est pas intègre, autrement dit, il ne correspond pas à un format reconnu, par exemple s'il manque des impulsions ou si des impulsions sont en excès dans le train d'impulsions dudit signal 253 ; dans ce cas, le second module cryptographique 104 génère un signal d'erreur, de préférence sur une sortie dédiée et reliée au répondeur 102, ce signal d'erreur étant avantageusement généré dès la détection de l'erreur ;
o le signal d'interrogation 254 est intègre mais la séquence d'authentification 253b n'est pas reconnue par le second module cryptographique 104 ; dans ce cas, le second module cryptographique 104 génère un signal d'erreur, de préférence sur une sortie dédiée et reliée au répondeur 102, ce signal étant par exemple généré après l'écoulement d'une durée fixée après la réception du préambule 253a du signal d'interrogation 254 ;
o le signal d'interrogation 254 est intègre et la séquence d'authentification 253b est reconnue par le second module cryptographique 104.
Dans ce dernier cas, le second module cryptographique 104 génère un signal de réponse retardé 263a d'une durée choisie parmi N valeurs possibles, la durée de retard choisie étant codée dans la séquence d'authentification 253b. Dans l'exemple d'une interrogation de type NSM, la durée de retard est choisie parmi 16 valeurs possibles. Dans l'exemple, le signal de réponse retardé 263a est un n-uplet d'impulsions — par exemple, un triplet pour le protocole NSM — retardé d'une durée TR par rapport au signal de déclenchement 255.

Outre ce classique signal de réponse retardé 263a, le second module cryptographique 104, extrait de la séquence d'authentification 253b le type de données 263b à transmettre, lequel type de données correspond au code 251 b de sélection d'un type de données initialement émis par l'interrogateur 101 — pour rappel, le code 251 b de sélection d'un type de données est optionnel —. Ensuite, le second module cryptographique 104 transmet au répondeur 102 un train d'impulsions comprenant les informations suivantes :
o le type de données à transmettre 263b, cette information ayant été décodée précédemment à partir de la séquence d'authentification 253b ;
o une autre séquence de codage 263c, mathématiquement liée à la séquence de codage 263c utilisée par l'interrogateur 101.

Dans un sixième temps 216, le répondeur 102 récupère, à partir de la plate-forme sur laquelle il est installé, les données à transmettre en fonction du type de données 263b demandé, puis le répondeur 102 encode ces données grâce à la séquence de codage 263c produite par le second module cryptographique 104. Les données encodées sont ensuite transmises par le répondeur 102 à l'interrogateur 101 via un signal de réponse 257 prenant dans l'exemple la forme d'un train d'impulsions, le signal étant par exemple transmis via une liaison radioélectrique 220. Avantageusement, les données sont formatées pour ressembler à un code d'identification au format Mark XA, de sorte que des équipements ne mettant pas en oeuvre le procédé selon l'invention considèrent le train d'impulsions codant les données comme un banal code d'identification.

Il y a séparation entre les données en clair à encoder puis à transmettre et les séquences de codage 263c et d'authentification 253b. En effet, seuls les modules cryptographiques 103, 104 peuvent interpréter la séquence d'authentification 253b et les séquences de codage 253c, 263c, et une donnée en clair ne transite jamais via l'un de ces modules cryptographiques 103, 104. Les données à transmettre sont encodées ou décodées par l'interrogateur 101 et/ou le répondeur 102 en utilisant les séquences de codage 253c, 263c transmises par les modules cryptographiques 103, 104 associés.

Dans un septième temps 217, l'interrogateur 101 décode les données encodées portées par le signal 257 en utilisant la séquence de codage 253c produite par le premier module cryptographique 103. Par ailleurs, le signal de réponse 263a retardé est transmis au premier module cryptographique 103. Le premier module cryptographique 103 produit un signal S après l'écoulement d'une durée qui, si l'interrogateur 101 et le répondeur 102 utilisent des clés cryptographiques compatibles, compense le retard temporel encodé par le second module cryptographique 104. L'interrogateur 101 vérifie ensuite que le signal S est soumis au retard temporel attendu.

Selon un autre mode de mise en oeuvre du procédé selon l'invention, les modules cryptographiques sont inexistants et l'interrogateur et le répondeur stockent une table de correspondance associant des séquences d'authentification avec un ou plusieurs des paramètres de transmission que sont la durée du retard, la séquence de codage ou type de données demandé. Selon ce mode de mise en oeuvre, une séquence d'authentification 253b est tout d'abord choisie du côté de l'interrogateur 101, puis lorsque le répondeur 102 reçoit cette séquence d'authentification 253b, il en déduit un retard temporel et/ou une séquence de codage à appliquer pour coder les données à transmettre.

Un avantage du procédé de transmission de données selon l'invention est qu'il peut être aisément mis en oeuvre sur des équipements matériels existant, en appliquant une simple mise à jour logicielle.

## Revendications

1. Procédé de transmission de données entre un répondeur et un interrogateur communiquant dans un mode sécurisé dans lequel l'interrogateur (101) émet un signal d'interrogation (254) comprenant une séquence d'authentification (253b) vers le répondeur (102) qui répond à l'interrogateur (101) par un signal soumis à un retard temporel dépendant de ladite séquence d'authentification, un message de sélection du type de données à transmettre étant inséré dans ledit signal d'interrogation, le répondeur décodant ledit message de sélection pour émettre vers l'interrogateur les données sélectionnées, le procédé étant **caractérisé en ce que** lesdites données sont formatées sous la forme de codes d'identification standards pour être masquées.

2. Procédé de transmission de données selon la revendication 1, **caractérisé en ce que** les données transmises sont formatées au format Mark XA.

3. Procédé de transmission de données selon l'une des revendications 1 et 2, **caractérisé en ce qu'**une première séquence de codage est utilisée par le répondeur (102) pour coder les données à transmettre à l'interrogateur (101), une seconde séquence de codage, liée par une relation mathématique univoque avec la première séquence de codage, étant utilisée par l'interrogateur (101) pour décoder lesdites données.

4. Procédé de transmission de données selon la revendication 3, **caractérisé en ce que** la seconde séquence de codage est égale à la première séquence de codage.

5. Procédé de transmission de données selon la revendication 4, **caractérisé en ce que** la séquence de codage est tirée aléatoirement parmi plusieurs séquences de codage préenregistrées.

6. Procédé de transmission de données selon l'une des revendications précédentes, **caractérisé en ce que** la première séquence de codage est générée par un premier module cryptographique (103) qui la transmet à l'interrogateur (101), la seconde séquence de codage étant générée par un second module cryptographique (104) qui la transmet vers le répondeur (102).

7. Procédé de transmission de données selon la revendication 6, les transmissions entre l'interrogateur et le répondeur respectant le protocole d'échange « National Secure Mode », les messages échangés étant transmis sous forme de trains d'impulsions, le procédé étant **caractérisé en ce qu'**il comprend au moins les étapes suivantes :
- le premier module cryptographique (103) génère et transmet à l'interrogateur (101) la seconde séquence de codage ;
- l'interrogateur (101) transmet au répondeur (102) un signal d'interrogation (254) comprenant la séquence d'authentification (253b) et un message de sélection du type de données à transmettre ;
- le second module cryptographique (104) fournit au répondeur (102) la première séquence de codage (253c) ;
- le répondeur transmet, en réponse à l'interrogateur, les données sélectionnées, codées par la première séquence de codage, et formatées sous la forme d'un code d'identification standard ;
- l'interrogateur décode les données transmises en utilisant la seconde séquence de codage.

8. Procédé de transmission de données selon l'une des revendications 1 et 2, **caractérisé en ce que** le répondeur (102) et l'interrogateur (101) accèdent chacun à une table de correspondance associant des séquences d'authentification à un ou plusieurs paramètres de transmission, un paramètre de transmission étant une séquence de codage ou un retard temporel ou un type de données à transmettre.

9. Système de transmission de données entre un interrogateur (101) et un répondeur (102), le système étant **caractérisé en ce qu'**il met en oeuvre le procédé de transmission de données selon l'une des revendications 1 à 8.

## Claims

1. A method for transmitting data between a responder and an interrogator communicating in a secure mode in which the interrogator (101) emits an interrogation signal (254) that comprises an authentication sequence (253b) to the responder (102) that responds to the interrogator (101) by a signal subjected to a time delay that depends on said authentication sequence, a message for selecting the type of data to be transmitted being included in said interrogation signal, the responder decoding said selection message in order to emit the selected data to the interrogator, the method being **characterised in that** said data is formatted in the form of standard identification codes in order to be masked.

2. The data transmission method according to claim 1, **characterised in that** the transmitted data is formatted in the Mark XA format.

3. The data transmission method according to any one of claims 1 to 2, **characterised in that** a first coding sequence is used by the responder (102) to encode the data to be transmitted to the interrogator (101), a second coding sequence, linked by a univocal mathematical relation with the first coding sequence, being used by the interrogator (101) to decode said data.

4. The data transmission method according to claim 3, **characterised in that** the second coding sequence is equal to the first coding sequence.

5. The data transmission method according to claim 4, **characterised in that** the coding sequence is drawn randomly from a plurality of pre-recorded coding sequences.

6. The data transmission method according to any one of the preceding claims, **characterised in that** the first coding sequence is generated by a first cryptographic module (103) that sends it to the interrogator (101), said second coding sequence being generated by a second cryptographic module (104) that sends it to the responder (102).

7. The data transmission method according to claim 6, wherein the transmissions between the interrogator and the responder comply with the "National Secure Mode" exchange protocol, the exchanged messages being transmitted in the form of pulse trains, the method being **characterised in that** it comprises at least the following steps:
- generating the second coding sequence by the first cryptographic module (103) and transmitting said second coding sequence to the interrogator (101);
- transmitting, by the interrogator (101), an interrogation signal (254) to the responder (102), which comprises the authentication sequence (253b) and a message for selecting the type of data to transmit;
- providing, by the second cryptographic module (104), the responder (102) with the first coding sequence (253c);
- transmitting by the responder, in response to the interrogator, the selected data coded by the first coding sequence and formatted in the form of a standard identification code;
- decoding, by the interrogator, the transmitted data by using the second coding sequence.

8. The data transmission method according to any one of claims 1 to 2, **characterised in that** the responder (102) and the interrogator (101) each access a correspondence table associating authentication sequences with one or more transmission parameters, one transmission parameter being a coding sequence or a time delay or a type of data to be transmitted.

9. A data transmission system between an interrogator (101) and a responder (102), the system being **characterised in that** it implements the data transmission method according to any one of claims 1 to 8.

## Patentansprüche

1. Verfahren zum Übertragen von Daten zwischen einem Responder und einem Interrogator, die in einem sicheren Modus kommunizieren, in dem der Interrogator (101) ein eine Authentifikationssequenz (253b) umfassendes Abftagesignal (254) zum Responder (102) sendet, der dem Interrogator (101) mit einem Signal antwortet, das einer Verzögerung unterzogen wird, die von der Authentifikationssequenz abhängt, wobei eine Nachricht zum Auswählen des Typs der zu übertragenden Daten in dem Abfragesignal enthalten ist, wobei der Responder die Auswalnachricht decodiert, um die ausgewählten Daten zum Interrogator zu senden, wobei das Verfahren **dadurch gekennzeichnet ist, dass** die Daten in Form von Standardidentifikationcodes formatiert werden, um maskiert zu werden.

2. Datenübertragungsverfahren nach Anspruch 1, dadurch gekenntzeichnet, dass die übertragenen Daten im Mark XA Format formatiert werden.

3. Datenübertragungsverfahren nach Anspruch 1 oder 2, **dadurch gekennzeichnet, dass** der Responder (102) zum Codieren der zum Interrogator (101) zu übertragenden Daten eine erste Codiersequenz benutzt, wobei eine zweite Codiersequenz, die durch eine eindeutige mathematische Beziehung mit der ersten Codiersequenz verknüpft ist, vom Interrogator (101) zum Decodieren der Daten benutzt wird.

4. Datenübertragungsverfahren nach Anspruch 3, **dadurch gekennzeichnet, dass** die zweite Codiersequenz gleich der ersten Codiersequenz ist.

5. Datenübertragungsverfahren nach Anspruch 4, **dadurch gekennzeichnet, dass** die Codiersequenz zufallsmäßig aus mehreren zuvor aufgezeichneten Codiersequenzen gezogen wird.

6. Datenübertragungsverfahren nach einem der vorherigen Ansprüche, **dadurch gekennzeichnet, dass** die erste Codiersequenz von ein ersten kryptographischen Modul (103) erzeugt wird, das sie zum Interrogator (101) überträgt, wobei die zweite Codiersequenz von einem zweiten kryptografischen Modul (104) erzeugt wird, das sie Responder (102) überträgt.

7. Datenübertragungsverfahren nach Anspruch 6, wobei die Übertragungen zwischen dem Interrogator und dem Responder dem Austauschprotokoll "National Secure Mode" entsprechen, wobei die ausgetauschten Nachrichten in Form von Impulsfolgen übertragen werden, wobei das Verfahren **dadurch gekennzeichnet ist, dass** es wenigstens die folgenden Schritte beinhaltet:
- Erzeugen, durch das erste kryptografische Modul (103), der zweiten Codiersequenz und Übertragen derselben zum Interrogator (101);
- Übertragen, durch den Interrogator (101), eines Abfragesignals (254) zum Responder (102), das die Authentifikationssequenz (253b) und eine Nachricht zum Auswählen des Typs von zu übertragenden Daten enthält;
- Zuführen, durch das zweite kryptografische Modul (104), der ersten Codiersequenz (253c) zu dem Responder (102);
- Übertragen, durch den Responder als Reaktion auf den Interrogator, der gewählten Daten, die mit der ersten Codiersequenz codiert und in Form eines Standardidentifikationcode formattiert sind;
- Decodieren der übertragenen Daten anhand der zweiten Codiersequenz durch den Interrogator.

8. Datenübertragungsverfahren nach einem der Ansprüche 1 bis 2, **dadurch gekennzeichnet, dass** der Responder (102) und der Interrogator (101) jeweils auf eine Korrespondenztabelle zugreifen, die Authentifikationssequenzen mit einem oder mehreren Übertragungsparametern assoziiert, wobei ein Übertragungsparameter eine Codiersequenz oder eine Zeitverzögerung oder ein Typ von zu übertragenden Daten ist.

9. Datenübertragungssystem zwischen einem Interrogator (101) und einem Responder (102), wobei das System **dadurch gekennzeichnet ist, dass** es das Datenübertragungsverfahren nach einem der Ansprüche 1 bis 8 ausführt.
